# EUROPEAN PATENT APPLICATION

(11) **EP 1 919 214 A1**
(43) Date of publication of application: **07.05.2008**
(21) Application number: 06775241.0
(22) Date of filing: 28.07.2006
(51) Int. Cl.: H04N 7/16, H04L 12/28

(54) **A BROADBAND ACCESS MEANS AND THE APPLICATION THEREOF**

(30) Priority: 29.07.2005 CN 200510088636
(71) Applicant: Huawei Technologies Co., Ltd., Longgang District Shenzhen 518129 (CN)
(72) Inventor: CHANG, Yue, Huawei Administration Building,, Shenzhen, Guangdong 518129 (CN); LI, Jun, Huawei Administration Building,, Shenzhen, Guangdong 518129 (CN); QU, Zhijun, Huawei Administration Building,, Shenzhen, Guangdong 518129 (CN); WU, Haijun, Huawei Administration Building,, Shenzhen, Guangdong 518129 (CN)
(74) Representative: Brand, Martin G.
(86) International application number: PCT/CN2006/001896
(87) International publication number: WO 2007/012287

(57) **Abstract**

A broadband access means with a built-in video service unit. Said built-in video service unit transmits the stored video service to the user terminal through the broadband access means it belongs according to the request of user terminal. Said video service unit comprises a unicast storage module; a unicast forward module, for transmitting the video service stored in the unicast storage module to the user terminal according to the unicast request of the user; a unicast retransmission module, for responding the retransmission request of the user terminal and retransmitting the lost unicast video message to the user terminal; a multicast storage means, for caching the multicast video stream in real time; and a multicast retransmission module, for responding the retransmission request of the user terminal and retransmitting the lost unicast video message to the user terminal via unicast traffic.

## Description

### Field of the Invention

The present invention relates to network communication technologies, and particularly, to broadband access equipment and a method for implementing a video service.

### Background of the Invention

Along with the spread of varieties of broadband access technologies, e.g., Digital Subscriber Line (DSL) based on twisted pair, optical fiber access, and wireless access, operators are expecting to develop more services over a network, and special attention is paid to video services including video broadcast, Video on Demand (VoD), etc.

Multicast and unicast are two basic transfer modes of video services; some complicated applications of video services may be implemented by means of the hybrid of multicast and unicast. A bearer network is required to offer reliable video stream distribution and corresponding QoS assurance according to demands of video services.

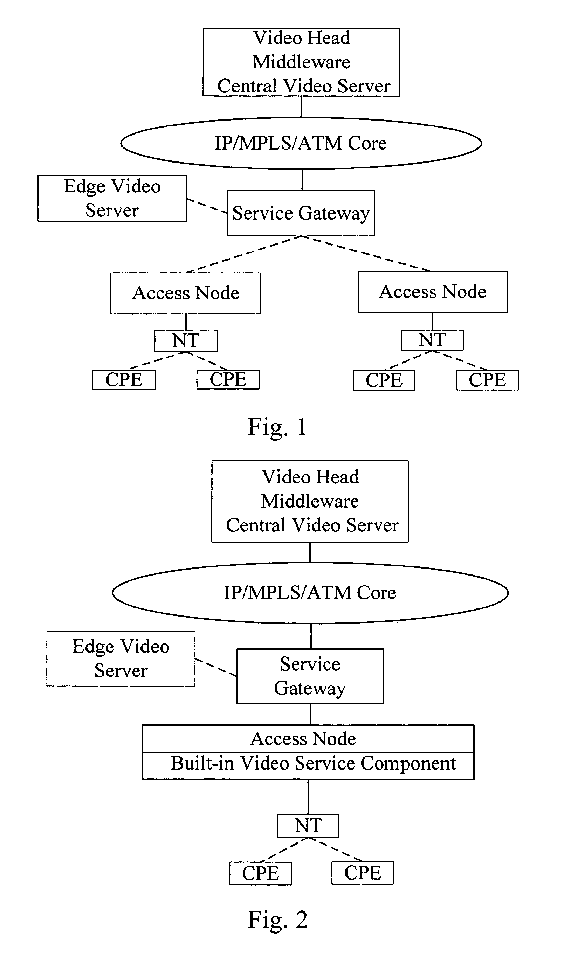

Figure 1 shows an architecture of a broadband access network based on which video services are provided in the prior art.

As shown in Figure 1, a Network Terminal (NT), e.g., a DSL modem, is a terminal for a subscriber to access a network. A Customer Premises Equipment (CPE), e.g., Set-Top Boxes (STB), is a terminal providing services and applications for a subscriber. As equipment for user or user home network, the CPE and the NT are logic concepts, which can be mapped into one same physical terminal, e.g., a 3G mobile phone which provides network access and applications at the same time; or be realized by separated equipment, e.g., a Residential Gateway (RG) and an STB. An Access Node is equipment providing broadband access, such as a Digital Subscriber Line Access Multiplexer (DSLAM) based on a DSL access network, a Base Station (BS) based on a wireless access network, e.g., WiMax, Wi-Fi or UMTS, and a Cable Modem Termination System (CMTS) in Cable access. A Service Gateway is equipment for providing network control and application control, such as a Broadband Remote Access Server (BRAS), an Edge Router (ER), a GGSN / SGSN, etc. An Edge Video Server is a video server which may act as a host in a network. The video server provides video services for video terminals having passed a network access authorization, therefore the video server is usually installed in a network layer above the BRAS, and the access to the video server has to be authenticated by the BRAS to ensure the safety of video components.

The method for providing video services in the prior art are as follows:

With respect to multicast video services, video streams of multicast service are distributed from a Video Headend through a core network along a tree topology to subscribers; With respect to unicast video services, video streams are pushed directly from a video server to a subscriber terminal; and the hybrid of multicast and unicast is needed to meet special service demands, e.g., Time Shift TV.

The multicast technology reduces the network bandwidth consumed by video services to a remarkable extent. A multicast tree is usually based on multicast route protocols, e.g., Internet Group Management Protocol (IGMP) / Protocol-Independent Multicast (PIM) / Distance Vector Multicast Routing Protocol (DVMRP).

The inventor discloses two notable issues with video services in the design of the present invention:
firstly, along with the increase of video service subscribers and video services, the bandwidth consumption of a network is of much concern;
secondly, the bit error rate in an access technology such as a DSL access technology or a WiMAX access technology results in the impairment of video quality.

With respect to the first issue, i.e., in order to reduce the network bandwidth consumed by video services and eliminate a bottleneck at a video server, a general solution of the prior art adopts a distributed video server to provide video services by partitioning. Aiming to improve the security and the manageability of network resources, in a broadband bearer network in the prior art a subscriber is isolated from a service in an access network below a service providing node such as BRAS / ER. Therefore, the distributed video server can be installed only above the service providing node such as BRAS / ER.

With respect to the second issue, a solution of the prior art depends on a retransmission mechanism of application layer. With respect to a unicast video stream, a mobile terminal sends a request to the source for retransmitting a packet in the video stream upon detecting the loss of the packet; however, no retransmission mechanism is provided for a multicast service.

A distributed video server is installed above a service providing node. Though only terminals authorized by an access network are allowed to access the distributed video server so that the network bandwidth between the access network and the service providing node is completely controllable, the service providing node has to dynamically detect video streams from the distributed video server in order to manage the network resources between the service providing node and the access network, which further complicates the network resource management at the service providing node. Furthermore, along with the increase of broadband access network subscribers and the rapid expansion of video service demands, the bandwidth bottleneck between a service providing node and an access network is growing more and more serious.

No retransmission mechanism is provided for a multicast service: therefore, a stream of multicast service can not be retransmitted to a specific multicast node, which impairs the quality of video. Moreover, since the loss of a packet mainly happens in an access media segment while a video server is deployed in a convergence layer or an even higher layer, the retransmitted packet in a unicast video stream consumes the network bandwidth between the access network and the convergence layer or the even higher layer.

### Summary of the Invention

Embodiments of the present invention provide broadband access equipment and the application of the broadband access equipment, which improves the utilization of network bandwidth, reduces the complexity of network resource management and eliminates a bottleneck at a video server by embedding a video service component in the broadband access equipment.

Embodiments of the present invention provide broadband access equipment which includes an embedded video service component transferring a stored video service to a subscriber terminal according to a request from a subscriber terminal.

The broadband access equipment includes:
a video service component, for storing video service data, and transmitting the video service data stored in the video service component to a subscriber terminal via the broadband access equipment according to a request from the subscriber terminal.
The video service component includes:
   a unicast store module, for storing a unicast video service data; and
   a unicast forwarding module, for receiving a unicast video service request, obtaining the unicast video service data from the unicast store module according to the unicast video service request, and transmitting the unicast video service data to the subscriber terminal via the broadband access equipment.

The video service component further includes:
a unicast retransmission module, for receiving a request for retransmitting a lost unicast video packet, obtaining the lost unicast video packet from the unicast store module according to loss information contained in the request for retransmitting the lost unicast video packet, and retransmitting the lost unicast video packet to the subscriber terminal via the broadband access equipment.

The video service component further includes:
a multicast store module, for receiving a multicast video stream from the network side in ream time, and storing the multicast video stream; and
a multicast retransmission module, for receiving a request for retransmitting a lost multicast video packet, obtaining the lost multicast video packet from the multicast store module according to loss information contained in the request for retransmitting the lost multicast video packet, and retransmitting the lost multicast video packet to the subscriber terminal via the broadband access equipment in a unicast mode.

The broadband access equipment further includes:
a video service component access control component, for obtaining access right information of the subscriber terminal, and controlling an access of the subscriber terminal to the video service component according to the access right information.

A system for providing a video service based on broadband access equipment includes: a video source, a service gateway and broadband access equipment including a video service component; and
the video source issues a video stream to the service gateway; and
the service gateway and the broadband access equipment transmits the video stream to a subscriber terminal.

A method for providing a video service includes:
a. building a video service component in broadband access equipment;
b. transmitting, by the video service component, the video service data stored in the video service component to a subscriber terminal via the broadband access equipment according to a request from the subscriber terminal.

The broadband access equipment includes: a digital subscriber line access multiplexer.

The video service in step b includes a unicast video service and/or a multicast video service; and
step b includes:
receiving, by the video service component, a unicast video service request from the subscriber terminal; and
transmitting, by the video service component, a corresponding unicast video service data stored in the video service component to the subscriber terminal via the broadband access equipment according to the unicast video service request; and/or
obtain, by the video service component, multicast video stream transmitted from the network side in real time and store the multicast video stream;
receiving, by the video service component, a request for retransmitting a lost multicast video packet sent from the subscriber terminal;
retransmitting, by the video service component, the lost multicast video packet stored in the video service component to the subscriber terminal via the broadband access equipment in a unicast mode according to loss information contained in the request for retransmitting the lost multicast video packet.
Step b further includes:
receiving, by the video service component, a request for retransmitting a lost unicast video packet sent from the subscriber terminal;
obtaining, by the video service component, the lost unicast video packet stored in the video service component according to loss information contained in the request for retransmitting the lost unicast video packet; and
retransmitting, by the video service component, the lost unicast video packet to the subscriber terminal.

The method, before step b, further includes:
determining the subscriber terminal allowed to access the video service component according to access right information of the subscriber terminal; and
the subscriber terminal sending the request is the subscriber terminal allowed to access the video service component.

It can be seen from the description of the above technical scheme that an embodiment of the present invention embeds a video service component in broadband access equipment so that the video service component can provide unicast video services directly to subscriber terminals. The bandwidth demands of the video services in an access network and a convergence network are reduced and the bottleneck caused by some new video services between a backbone network and a convergence network is effectively eliminated.

The video service component in the broadband access equipment can switch between unicast services and multicast services in a more convenient way to speed up channel switching, thereby bettering the experience of subscribers. As the video service component is built in the broadband access equipment, the video service component can be regarded as internal resources of the broadband access equipment and thus will not violate the design principle of isolation of subscribers and services in the broadband access network and the convergence network. The video service component simplifies the resource management mechanism of the whole access network and convergence network. The network bandwidth resources between the video service component of the broadband access equipment and other network equipment are turned into internal resources of the broadband access equipment. Thus, the bandwidth demands of the access network and the convergence network at a service providing node are reduced without management or control performed on a network layer, and the management of network resources is simplified.

In accordance with the embodiments of the present invention, the retransmission traffic of unicast video packets in a unicast video stream does not consume the bandwidth of the convergence network, and the video service component effectively supports the retransmission of lost multicast video packets in a multicast video stream. Thus, the video quality of the subscriber terminal will be significantly improved. Neither does the retransmission traffic of multicast video packets in a multicast video stream consume the bandwidth of the convergence network.

The broadband access equipment in the embodiments of the present invention controls the access of a subscriber terminal to the video service component and hence assures the access network security and simplifies the authorization management of access control of the access network without violating the design principle of isolation of subscribers from services on the access layer in an existing network. In accordance with the embodiments of the present invention, the utilization of network bandwidth is increased, the network resource management is simplified, and the bottleneck at a video server is eliminated.

### Brief Description of the Drawings

Figure 1 shows a schematic architecture of a broadband access network based on which video services are provided in the prior art.
Figure 2 shows a network system in which video services are provided based on broadband access equipment in accordance with an embodiment of the present invention.
Figure 3 is a schematic flow chart illustrating the retransmission of a multicast video packet in accordance with another embodiment of the present invention.

### Detailed Description of the Invention

Installing a video server above a service providing node complicates network resource management and brings a more serious bandwidth bottleneck between the service providing node and an access network and a serious bottleneck at a video server. Simply installing the video server in an access layer to solve the above problems requires an access network and a convergence network both below the service providing node to support video service interconnecting, thereby threatening the security of the whole network. Furthermore, when the video server is installed in the convergence network between the broadband access node and the service providing node, the logic topology of internal service streams in the access network will no longer be a tree structure and thus the network resource management in the access network will be further complicated.

Embodiments of the present invention provide broadband access equipment, a network system which provides video services based on the broadband access equipment, and a method for providing the video services by building a video service component in the broadband access equipment; the broadband access equipment with the video service component and the network in which the broadband access equipment is installed provide the video services to subscriber terminals.

The technical scheme of the present invention is further explained herein with reference to the accompanying drawings.

In accordance with an embodiment of the present invention, Broadband access equipment, which may be a DSLAM, includes a video service component built in the broadband access equipment. The video service component mainly includes: a unicast store module, a unicast forwarding module, a unicast retransmission module, a multicast store module and a multicast retransmission module. A broadband access equipment access control module for controlling the access to the video service component is also included in the broadband access equipment in accordance with the embodiment of the present invention to ensure the security of an access network and simplify the authorization management of access control of the access network.

The broadband access equipment access control module is mainly used for controlling an access of a subscriber terminal to the video service component according to the access right information, that is, for determining whether the subscriber terminal is allowed to access the video service component. For example, the access right information may be stored in the broadband access equipment access control module, and when the subscriber terminal attempts to access the video service component, the broadband access equipment access control module verifies access attribute information of the subscriber terminal, e.g., Permanent Virtual Channel (PVC), port, etc., determines the access right granted for the subscriber terminal to access the video service component, and controls the access of the subscriber terminal to the video service component according to the access right corresponding to the subscriber terminal.

The unicast store module is mainly used for storing unicast video service data which may be received from a video source, e.g., the unicast store module may receive and store the unicast video service data transmitted from the network side, e.g., a video source, via a service gateway.

The unicast forwarding module is mainly used for receiving a unicast video service request, obtaining unicast video service data from the unicast store module according to the unicast video service request, and transmitting the unicast video service data to the subscriber terminal via the access component. The subscriber terminal should be allowed to access the video service component.

The unicast retransmission module is mainly used for receiving a request for retransmitting a lost unicast video packet, obtaining the lost unicast video packet from the unicast store module according to loss information contained in the request for retransmitting the lost unicast video packet, and retransmitting the lost unicast video packet to the subscriber terminal via the access component.

The multicast store module is mainly used for receiving a multicast video stream from the network side, and storing the multicast video service data in real-time.

The multicast retransmission module is mainly used for receiving a request for retransmitting a lost multicast video packet, obtaining the lost multicast video packet from the multicast store module according to loss information contained in the request for retransmitting the lost multicast video packet, and retransmitting the lost multicast video packet to the subscriber terminal via the access component in a unicast mode. The subscriber terminal should be allowed to access the video service component..

The multicast video stream in the embodiment of the present invention includes a broadcast video stream.

Figure 2 shows a network system in which a video service is provided based on broadband access equipment in accordance with another embodiment of the present invention.

The network system in Figure 2 includes: a video source, a service gateway and broadband access equipment with a video service component. The video source transmits a unicast video stream and a multicast video stream to the service gateway; the service gateway further transmits the unicast video stream and multicast video stream to the broadband access equipment with the video service component. The video service component in the broadband access equipment stores the unicast video stream and transmits unicast video packets in the unicast video stream stored in the video service component to the subscriber terminal via an access component in the broadband access equipment upon receiving a unicast video packet request from the subscriber terminal. While the broadband access equipment transmits the multicast video stream to the subscriber terminal, the video service component obtains and stores the multicast video stream. Upon receiving a request from the subscriber terminal for retransmitting a lost multicast video packet, the video component obtains the lost multicast video packet from the video service component according to loss information contained in the request, and retransmits the lost multicast video packet to the subscriber terminal via the access component of the broadband access equipment in a unicast mode.

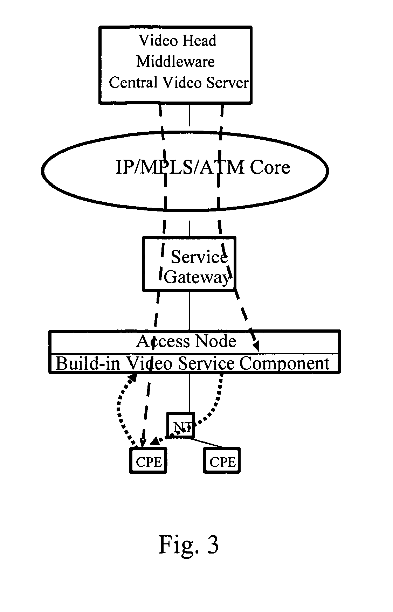

The network system providing multicast video services based on the broadband access equipment and the method for providing the multicast video services are further explained with reference to the method for retransmitting the multicast video services illustrated in Figure 3.

In Step 1-1, in Figure 3, a multicast video stream is transmitted from a video source through a service gateway and broadband access equipment to the subscriber terminal; the control of multicast access right of the subscriber terminal is performed with another technical method which is not covered by the present invention.

In Step 1-2, a video service component caches a video multicast video stream in real-time, and the capacity of cache is based on the maximum transmission delay allowed by video services.

In Step 2, a loss of a multicast video packet in the multicast video stream occurs in a line due to line transmission errors when the multicast video stream is transmitted to the subscriber terminal.

In Step 3, the subscriber terminal detects the loss of the multicast video packet in the multicast video stream and sends a request to the video service component for retransmitting the lost multicast video packet.

In Step 4, the video service component receives the request for retransmitting the lost multicast video packet and verifies the validity of the subscriber terminal according to the access right information of the subscriber terminal sending the request, and after determining the validity of the subscriber terminal, the video service component transmits the lost multicast video packet requested by the subscriber terminal to the subscriber terminal in a unicast mode.

In accordance with an embodiment of the present invention, a video service component is built in broadband access equipment so that the video service component can provide unicast video services directly to a subscriber terminal; therefore, the bandwidth demands of video services in an access network and a convergence network are reduced and the problem of bottleneck brought by new video services, e.g., Personal Video Record (PVR), Time Shift TV and multi-screen, between a backbone network and a convergence network is effectively solved.

The video service component in the broadband access equipment can implement switching between unicast and multicast in a more convenient way to speed up the channel switching, thereby improving the experience of subscribers. As built in the broadband access equipment, the video service component can be regarded as internal resources of the broadband access equipment and thus will not violate the design principle of the isolation of subscribers and services in the broadband access network and the convergence network. The video service component simplifies the resource management mechanism of the whole access network and convergence network. The network bandwidth resources between the video service component of the broadband access equipment and other network equipment are turned into internal resources of the broadband access equipment. The bandwidth demands of the access network and the convergence network at a service providing node are reduced without management or control performed on the network layer, and the management of network resources is simplified.

The retransmission traffic of the unicast video packets does not consume the network bandwidth of the convergence layer, and the utilization of network bandwidth is improved. The video service component of the broadband access equipment effectively supports the retransmission of lost multicast video packets in a multicast video stream, and therefore the video quality of the subscriber terminal will be significantly improved. Neither does the retransmission of a multicast video packet in a multicast video stream consume the network bandwidth of the access layer and the convergence layer.

The embodiments of the present invention do not need features such as BRAS in the access equipment which controls the access of the subscriber terminal to the video service component according to the authorization information corresponding to the access link information of the subscriber terminal, for example, attributes such as PVC or port. Thus, the access network as well as the authorization management of the access control of the access network is simplified without violating the existing design principle of the isolation of subscribers from services in the access network.

Though the present invention is illustrated with reference to the foregoing embodiments, those skilled in the art should be aware that alternatives and variations could be made within the spirit and scope of the present invention; therefore, any modifications or variations within the technical scope disclosed by the present invention should be covered by the protection scope of the present invention.

## Claims

1. Broadband access equipment, comprising:
a video service component, for storing video service data, and transmitting the video service data stored in the video service component to a subscriber terminal via the broadband access equipment according to a request from the subscriber terminal.

2. The broadband access equipment of Claim 1, wherein the video service component comprises:
a unicast store module, for storing a unicast video service data; and
a unicast forwarding module, for receiving a unicast video service request, obtaining the unicast video service data from the unicast store module according to the unicast video service request, and transmitting the unicast video service data to the subscriber terminal via the broadband access equipment.

3. The broadband access equipment of Claim 2, wherein the video service component further comprises:
a unicast retransmission module, for receiving a request for retransmitting a lost unicast video packet, obtaining the lost unicast video packet from the unicast store module according to loss information contained in the request for retransmitting the lost unicast video packet, and retransmitting the lost unicast video packet to the subscriber terminal via the broadband access equipment.

4. The broadband access equipment of Claim 1, wherein the video service component further comprises:
a multicast store module, for receiving a multicast video stream from the network side in ream time, and storing the multicast video stream; and
a multicast retransmission module, for receiving a request for retransmitting a lost multicast video packet, obtaining the lost multicast video packet from the multicast store module according to loss information contained in the request for retransmitting the lost multicast video packet, and retransmitting the lost multicast video packet to the subscriber terminal via the broadband access equipment in a unicast mode.

5. The broadband access equipment of any one of Claims 1 to 4, further comprising:
a video service component access control component, for obtaining access right information of the subscriber terminal, and controlling an access of the subscriber terminal to the video service component according to the access right information.

6. A system for providing a video service based on broadband access equipment, comprising: a video source, a service gateway and broadband access equipment comprising a video service component; wherein
the video source issues a video stream to the service gateway; and
the service gateway and the broadband access equipment transmits the video stream to a subscriber terminal.

7. A method for providing a video service, comprising:
a. building a video service component in broadband access equipment;
b. transmitting, by the video service component, the video service data stored in the video service component to a subscriber terminal via the broadband access equipment according to a request from the subscriber terminal.

8. The system of Claim 7, wherein the broadband access equipment comprises: a digital subscriber line access multiplexer.

9. The method of Claim 7, wherein:
the video service in step b comprises a unicast video service and/or a multicast video service; and
step b comprises:
receiving, by the video service component, a unicast video service request from the subscriber terminal; and
transmitting, by the video service component, a corresponding unicast video service data stored in the video service component to the subscriber terminal via the broadband access equipment according to the unicast video service request; and/or
obtain, by the video service component, multicast video stream transmitted from the network side in real time and store the multicast video stream;
receiving, by the video service component, a request for retransmitting a lost multicast video packet sent from the subscriber terminal;
retransmitting, by the video service component, the lost multicast video packet stored in the video service component to the subscriber terminal via the broadband access equipment in a unicast mode according to loss information contained in the request for retransmitting the lost multicast video packet.

10. The method of Claim 7, wherein step b further comprises:
receiving, by the video service component, a request for retransmitting a lost unicast video packet sent from the subscriber terminal;
obtaining, by the video service component, the lost unicast video packet stored in the video service component according to loss information contained in the request for retransmitting the lost unicast video packet; and
retransmitting, by the video service component, the lost unicast video packet to the subscriber terminal.

11. The method of any one of Claims 7 to 10, before step b, further comprising:
determining the subscriber terminal allowed to access the video service component according to access right information of the subscriber terminal; wherein
the subscriber terminal sending the request is the subscriber terminal allowed to access the video service component.
